# EUROPÄISCHE PATENTSCHRIFT

(11) **EP 1 154 536 B1**
(45) Veröffentlichungstag und Bekanntmachung des Hinweises auf die Patenterteilung: **25.08.2010**
(21) Anmeldenummer: 01111704.1
(22) Anmeldetag: 14.05.2001
(51) Int. Cl.: H02G 5/02

(54) **Vorrichtung zur Montage von Energie-Sammelschienen**
Mounting device for power busbars
Dispositif de montage de barres omnibus de puissance

(30) Priorität: 12.05.2000 DE 20008566 U
(43) Veröffentlichungstag der Anmeldung: 14.11.2001
(73) Patentinhaber: SIEMENS AKTIENGESELLSCHAFT, 80333 München (DE)
(72) Erfinder: Kitzel, Hans-Peter, 90427 Nürnberg (DE); Voss, Werner, 90556 Cadolzburg (DE); Wengler, Peter, 91058 Erlangen (DE)

(56) Entgegenhaltungen:
- DE-A- 1 962 561
- DE-A- 2 459 676
- US-A- 5 695 263

## Beschreibung

Die vorliegende Erfindung betrifft eine Vorrichtung zur Montage von Innen- und Außenleiter aufweisenden Energie-Sammelschienen und der für deren Beschaltung erforderlichen Elemente.

Eine Sammelschiene ist beispielsweise bekannt aus dem DE-GM 90 15 949, welche einen Außenleiter in Form eines geschlitzten, zylindrischen Rohres offenbart, in dessen Mitte ein Innenleiter, ebenfalls mit einem kreisförmigen Querschnitt, koaxial angeordnet ist. Am Innenleiter befestigte Anschlüsse aus Flachmaterial durchragen den Außenleiter im Bereich der Schlitze. Diese vorbekannte Sammelschiene ist vibrationsfest und insbesondere magnetisch streufeldarm. Insbesondere hat sich die Beschaffung der für dessen Herstellung benötigten Materialien als problematisch erwiesen. Darüber hinaus ist die Fertigung überaus aufwendig.

Die US-A-5,695,263 offenbart einen Schrank zur Aufnahme elektrischer und elektronischer Geräte und Baugruppen, der aus einem Rahmengestell besteht, welches oben und unten mit einer Abdeckung, mit Seitenwänden, auf der Rückseite mit einer Wand oder einer Tür und an der Vorderseite mit einem Rahmen oder einer Tür versehen ist.

Die DE-A-1962561 offenbart eine Vorrichtung gemäß Oberbegriff des Patentanspruchs 1, bei der eine Schalttafel bzw. ein Schaltgerüst in Rahmenbauweise unter Verwendung von Rahmenstücken einheitlichen Querschnitts, die beispielsweise aus Aluminium gefertigt sind und mit Hilfe von Verbindungsstücken miteinander verbunden sind, hergestellt ist. Die Rahmenstücke haben in Längsrichtung durchgehende formgleiche C-förmige Nuten, in denen durch Klemmung verschiedene Schalttafelaufbauten, wie z.B. Geräte, Gerätetragleisten usw. befestigbar sind.

Insbesondere im Einsatzbereich auf modernen U-Booten werden Schaltanlagen und Verkabelungen in besonders magnetisch streufeldarmer Ausführung vorgeschrieben. Das Hauptnetz wird bei konventionellen diesel-elektrischen U-Booten üblicherweise von der Batterie gespeist. Wegen der Forderung nach besonders niedrigen magn. Streufeldwerten bedarf es einer speziellen Verschienung der Hauptschalttafel.

Die Energie-Sammelschienen und die zu deren Beschaltung erforderlichen Elemente müssen ebenfalls den Einsatzbedingungen auf Wasserfahrzeugen, insbesondere auch bei U-Booten, genügen und hinsichtlich amagnetischer und streufeldarmer Bauweise realisierbar sein. Derartige Schaltschränke müssen darüber hinaus vibrationsfest sein, hohen Schockanforderungen genügen und an die baulichen Bedingungen vor Ort angepasst werden können.

Ausgehend vom vorbeschriebenen Stand der Technik liegt der vorliegenden Erfindung die Aufgabe zugrunde, eine Vorrichtung zur Montage von Energie-Sammelschienen und der für deren Beschaltung erforderlichen Elemente bereitzustellen, die einfach und flexibel aus leicht beschaffbaren Materialien herzustellen, leicht montierbar und die Anforderungen hinsichtlich amagnetischer Bauweise erfüllen.

Zur technischen Lösung dieser Aufgabe wird eine Vorrichtung gemäß Patentanspruch 1 vorgeschlagen.

Ein derartiges Gerüst kann zum Aufbau einer Schalttafel verwendet werden und besteht aus einfachen Aluminium-Strangpressprofilen und Eckverbindungselementen. Die Strangpressprofile können hinsichtlich der an die baulichen Randbedingungen am Einbauort angepassten Dimensionierungen ohne weiteres angepasst werden. Die Eckverbindungselemente können derart ausgebildet sein, dass aus drei oder vier zueinander senkrecht stehenden Richtungen zulaufende Strangpressprofile verbunden werden können. Das Gerüst hat also die Breite bestimmende horizontale Strangpressprofile und die Tiefe bestimmende horizontale Strangpressprofile, die jeweils über Eckverbinder miteinander verbunden sind und eine Horizontalebene definieren, sowie die Höhe bestimmende vertikal verlaufende Strangpressprofile, die ebenfalls an den Eckverbindungselementen befestigbar sind. Die Eckverbindungselemente sind gemäß einem vorteilhaften Vorschlag ebenfalls aus Aluminium gebildet und die Verbindung zwischen Eckverbindungselementen und Strangpressprofilen erfolgt durch Verschraubung, vorzugsweise unter Verwendung von amagnetischen Schrauben. Durch diese Aufbauweise wird das Schalttafelgerüst vollständig amagnetisch. Darüber hinaus können erforderlichen Falls schwingungsdämpfende Elemente anmontiert werden, um Vibrationen weitestgehend vermeiden zu können und Schockbelastungen weitestgehend abzubauen.

In vorteilhafter Weise erfolgt die Befestigung der Energie-Sammelschiene und der gegebenenfalls zur Beschaltung erforderlichen Elemente durch Verschraubung am Gerüst, wobei vorzugsweise Gewindegleitmuttern verwendet werden. Dabei erfolgt die Montage vorzugsweise im Inneren des Gerüstes. Dazu werden vorzugsweise Montagewinkel verwendet, die in Nuten der Strangpressprofile verschiebbar sind, wozu die Gewindegleitmuttern verwendet werden. Diese Winkel dienen der Montage der Sammelschiene und der Leistungsschalter.

Erfindungsgemäß erfolgt die Montage derart, dass die Anschlussstücke einerseits und die Anschlussstücke der Leistungsschalter andererseits zueinander fluchtend positioniert sind. Diese können dann durch Direktverschraubung miteinander verbunden werden.

Das erfindungsgemäße Schalttafelgerüst erfüllt die Erfordernisse an magnetisch streufeldarmer Verschienung, kompakter Bauweise, einfache Herstellung und Vorfertigung, stehende oder hängende Aufstellung, wobei auch gegebenenfalls nur einseitige Befestigungen am Fundament möglich sind. Darüber hinaus werden ausschließlich amagnetische Gerüstmaterialien verwendet.

In Kombination mit einem neuartigen Sammelschienen-System lässt sich das Gerüst besonders vorteilhaft einsetzen. Das neuartige Sammelschienen-System umfasst einen Außenleiter, der aus zwei Profilschienen mit offenem Querschnitt zusammengesetzt ist, und eine als Flachteil ausgebildeten Innenleiter, der seitlich aus dem Außenleiter herausstehende Anschlussstücke aufweist. Die Anschlussstücke sowohl des Außenleiters als auch des Innenleiters lassen sich hinsichtlich der Position exakt in die lichten Öffnungsbereiche des Gerüstes planen oder das Gerüst lässt sich entsprechend anpassen. Auf diese Weise lassen sich die Anschlussstücke der Schiene einerseits und die Anschlussstücke der Schalter andererseits zueinander fluchtend und auf einfache Weise montierbar positionieren.

Weitere Vorteile und Merkmale der Erfindung ergeben sich aus der folgenden Beschreibung anhand der Figuren. Dabei zeigen:

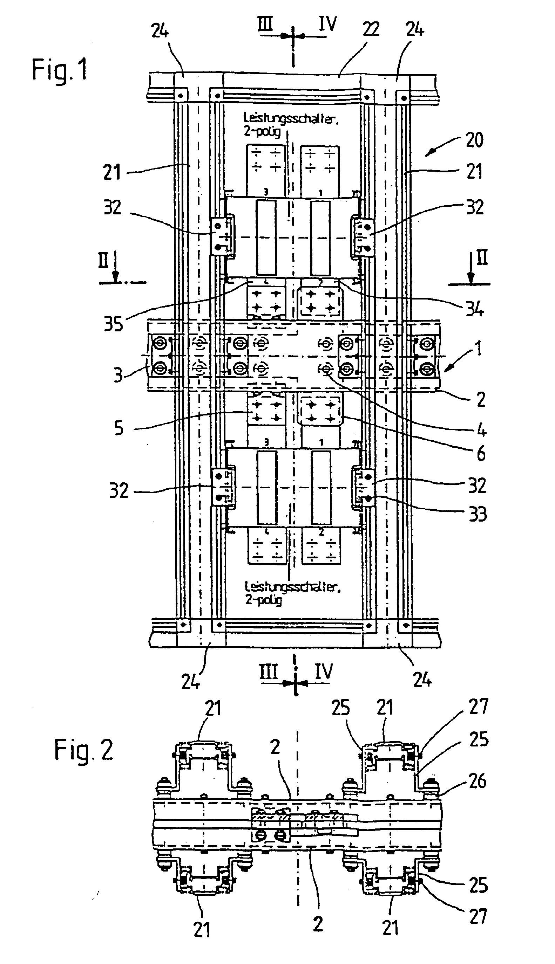

- FIG 1: eine Ansicht eines Ausführungsbeispiels der Erfin- dung;
- FIG 2: ein Schnitt entlang der Linie II-II gemäß FIG 1;

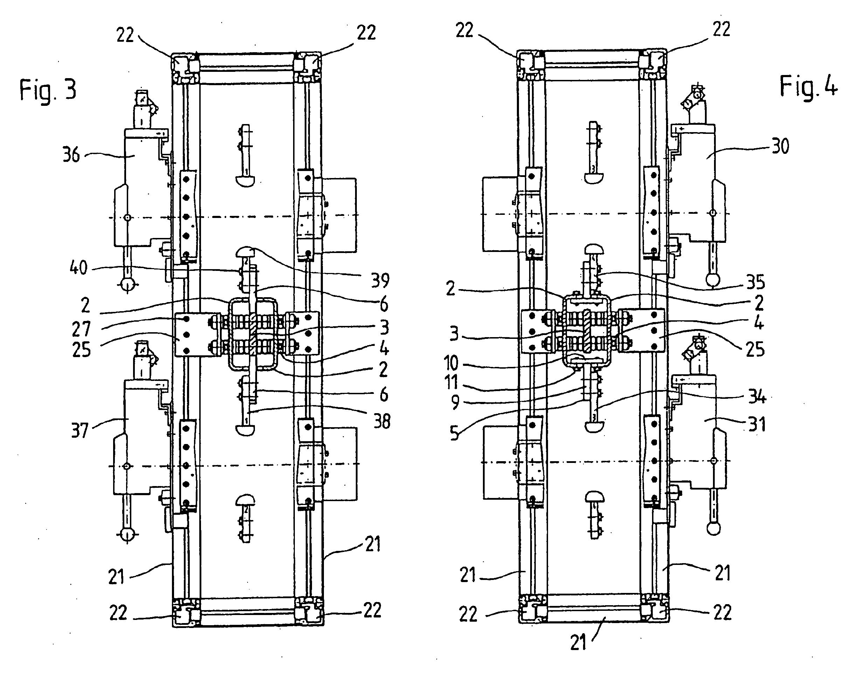

- FIG 3: ein Schnitt entlang der Linie III-III gemäß FIG 1 und
- FIG 4: ein Schnitt entlang der Linie IV-IV gemäß FIG 1.

In den Figuren sind gleiche Elemente mit gleichen Bezugszeichen versehen.

Die Sammelschiene 1 besteht aus den Außenleitern 2 und einem Innenleiter 3, die mittels eines Schrauben-/Isolatorensystems 4 relativ zueinander fixiert sind. Die Außenleiter 2 bestehen aus zwei Profilschienen mit offenem Querschnitt, im gezeigten Ausführungsbeispiel mit einem U-förmigen Querschnitt. Diese sind durch Anschlussstücke 5 verbunden und befestigbar. Die Anschlussstücke 5 haben einen T-förmigen Querschnitt. Der T-Balken 10 ist im gezeigten Ausführungsbeispiel aus Platzgründen im Inneren der Profilschiene angeordnet und mittels Schrauben 11 mit beiden Profilschienen verschraubt. Der T-Schenkel 9 ragt aus den Profilschienen heraus und dient der Befestigung und Kontaktierung.

Diese Art der Befestigung ermöglicht die freie Positionierung der Anschlussstücke 5 über die Länge. Dabei kann man Stabilitätsgesichtspunkte und bauliche Randbedingungen vor Ort berücksichtigen.

Der als Flachteil ausgebildete Innenleiter 3 hat stellenweise quer zu Längsmittelachse abstehende Anschlussschenkel 6, die elektrisch isoliert den Schlitz zwischen den beiden den Auβenleiter bildenden Profilschienen 2 durchragen und der Kontaktierung und Befestigung dienen.

Sämtliche Elemente können aus Kupfer gebildet sein, wobei das Flachteil ein Stanzteil ist. Im Rahmen der Erfindung können an dem Innenleiter 3 auch seitlich herausragende Anschlussstücke mittels Schrauben oder dergleichen befestigt sein, wenn ein Ausstanzen nicht möglich ist.

Das Schaltgerüst 20 besteht aus unterschiedlichen holmartigen Strangpressprofilen 21 und 22, die mittels Eckverbindern 24 miteinander verbunden sind. Die Verbindung erfolgt durch Verschraubung. Die Eckverbinder können die aus vier unterschiedlichen und senkrecht aufeinanderstehenden Richtungen zulaufenden Strangpressprofile aufnehmen. Ausführungsformen für Dreifachverbindung oder Fünf- oder Mehrfachverbindung liegen im Rahmen der Erfindung. Die Energiesammelschiene 1 ist mittels Winkelstücken 25 am Schaltgerüst befestigt, wozu ein Schrauben-/Isoliersystem 26 verwendet wird. Die Winkelstücke 25 sind wiederum mittels Gewindegleitmuttern 27 am Strangpressprofil befestigt, so dass eine Positionierung der Sammelschiene ohne weiteres möglich ist.

Im gezeigten Ausführungsbeispiel sind Leistungsschalter 30, 31, 36 und 37 gezeigt, wobei es sich um zweipolige oder dreipolige Ausführungen handeln kann. Bei einer Vorgabe niedriger magn. Streufeldgrenzwerte werden Leistungsschalter in dreipoliger Ausführung eingesetzt.

Die Leistungsschalter sind auf Montageeinheiten befestigt, die ihrerseits mittels Befestigungsstücken 32 unter Verwendung von Gewindegleitmuttern 33 an den Holmen befestigt sind. Auf diese Weise kann eine Positionierung derart erfolgen, dass die Anschlussstücke 5 des Außenleiters 2 bzw. 6 des Innenleiters 3 mit den Anschlussstücken 34, 35 bzw. 38, 39 zueinander fluchtend positioniert werden können. Die Verbindung erfolgt durch Direktverschraubung mittels Schrauben 40.

Das beschriebene Ausführungsbeispiel dient nur der Erläuterung und ist nicht beschränkend.

## Patentansprüche

1. Vorrichtung zur Montage von Innen- und Außenleiter (3 bzw. 2) aufweisenden Energie-Sammelschienen(1) und der für deren Beschaltung erforderlichen Elemente mit einem aus Aluminium-Strangpressprofilen (21, 22) und Eckverbindungselementen (24) zusammengesetzten Gerüst (20), an welchem die Sammelschiene (1) und Beschaltungselemente befestigbar sind,
**dadurch gekennzeichnet , dass** als Beschaltungselemente Leistungsschalter (30, 31, 36, 37) angeordnet sind, wobei die Energie-Sammelschiene (1) und die Leistungsschalter (30, 31, 36, 37) derart in dem Gerüst (20) eingesetzt sind, dass die Anschlussstücke (5) der Energie-Sammelschiene (1) und die Anschlussstücke (34, 35, 38, 39) der Leistungsschalter (30, 31, 36, 37) zueinander fluchtend angeordnet sind.

2. Vorrichtung nach Anspruch 1,
**dadurch gekennzeichnet, dass** die Eckverbindungselemente (24) zur Verbindung von aus wenigstens drei zueinander senkrecht stehenden Richtungen zusammenlaufenden Aluminium-Strangpressprofilen (21, 22) geeignet sind.

3. Vorrichtung nach einem der vorhergehenden Ansprüche,
**dadurch gekennzeichnet , dass** die Eckverbindungselemente (24) aus Aluminium gefertigt sind.

4. Vorrichtung nach einem der vorhergehenden Ansprüche,
**dadurch gekennzeichnet , dass** die Verbindung der Aluminium-Strangpressprofile (21, 22) mit den Eckverbindungselementen (24) durch Verschraubung erfolgt.

5. Vorrichtung nach einem der vorhergehenden Ansprüche,
**dadurch gekennzeichnet, dass** die Befestigung der Sammelschiene (1) und/oder der Beschaltungselemente am Gerüst (20) durch Verschraubung erfolgt.

6. Vorrichtung nach Anspruch 5,
**dadurch gekennzeichnet, dass** für die Verschraubung Gewindegleitmuttern (27, 33) eingesetzt sind.

7. Vorrichtung nach einem der vorhergehenden Ansprüche,
**dadurch gekennzeichnet , dass** die Befestigung in den Nuten der Strangpressprofile (21, 22) erfolgt.

8. Vorrichtung nach Anspruch 1,
**dadurch gekennzeichnet, dass** die zueinander fluchtend positionierten Anschlussstücke (5, 34, 35, 38, 39) direkt miteinander verschraubt sind.

## Claims

1. Apparatus for fitting power busbars (1), which have inner and outer conductors (3 and 2 respectively), and the elements which are required for their connection, having a framework (20) which is composed of aluminium extruded profiles (21, 22) and corner connecting elements (24) and to which the busbar (1) and connection elements can be attached,
**characterized in that** circuit breakers (30, 31, 36, 37) are arranged as connection elements, wherein the power busbar (1) and the circuit breakers (30, 31, 36, 37) are inserted in the framework (20) such that the connecting pieces (5) of the power busbar (1) and the connecting pieces (34, 35, 38, 39) of the circuit breakers (30, 31, 36, 37) are arranged aligned with one another.

2. Apparatus according to Claim 1, **characterized in that** the corner connecting elements (24) are suitable for connecting aluminium extruded profiles (21, 22) which run together from at least three mutually perpendicular directions.

3. Apparatus according to one of the preceding claims, **characterized in that** the corner connecting elements (24) are made of aluminium.

4. Apparatus according to one of the preceding claims, **characterized in that** the aluminium extruded profiles (21, 22) are connected to the corner connecting elements (24) by screw connection.

5. Apparatus according to one of the preceding claims, **characterized in that** the busbar (1) and/or the connection elements are attached to the framework (20) by screw connection.

6. Apparatus according to Claim 5, **characterized in that** threaded sliding nuts (27, 33) are used for the screw connection.

7. Apparatus according to one of the preceding claims, **characterized in that** the attachment takes place in the grooves in the extruded profiles (21, 22).

8. Apparatus according to Claim 1, **characterized in that** the connecting pieces (5, 34, 35, 38, 39), which are positioned such that they are aligned with respect to one another, are screwed directly to one another.

## Revendications

1. Dispositif de montage de barres ( 1 ) omnibus de puissance ayant des conducteurs ( 3 et 2 ) et des éléments nécessaires à leur câblage ayant un cadre ( 20 ) composé de profilés ( 21, 22 ) filés à la presse en aluminium et d'élément ( 24 ) d'assemblage de coin, cadre sur lequel les barres ( 1 ) omnibus et les éléments de câblage peuvent être fixés, **caractérisé en ce que** des disjoncteurs ( 30, 31, 36, 37 ) sont montés comme éléments de câblage, les barres ( 1 ) omnibus de puissance et les disjoncteurs ( 30, 31, 36, 37 ) étant insérés dans le cadre ( 20 ) de manière à ce que les pièces ( 5 ) de connexion des barres ( 1 ) omnibus de puissance et les pièces ( 34, 35, 38, 39 ) de connexion des disjoncteurs ( 30, 31, 36, 37 ) soient alignées les unes avec les autres.

2. Dispositif suivant la revendication 1,
**caractérisé en ce que** les éléments ( 24 ) d'assemblage de coin sont appropriés pour l'assemblage de profilés ( 21, 22 ) d'aluminium filés à la presse convergent à partir d'au moins trois directions perpendiculaires entre elles.

3. Dispositif suivant l'une des revendications précédentes, **caractérisé en ce que** les éléments ( 24 ) d'assemblage de coin sont en aluminium.

4. Dispositif suivant l'une des revendications précédentes, **caractérisé en ce que** l'assemblage des profilés ( 21, 22 ) d'aluminium filés à la presse aux éléments ( 24 ) d'assemblage de coin s'effectue par vissage.

5. Dispositif suivant l'une des revendications précédentes, **caractérisé en ce que** la fixation des barres ( 1 ) omnibus et/ou des éléments de câblage au cadre ( 20 ) s'effectue par vissage.

6. Dispositif suivant la revendication 5,
**caractérisé en ce que** pour le vissage on utilise des écrous-coulisseaux ( 27, 33 ) filetés.

7. Dispositif suivant l'une des revendications précédentes, **caractérisé en ce que** la fixation s'effectue dans les rainures des profilés ( 21, 22 ) filés à la presse.

8. Dispositif suivant la revendication 1,
**caractérisé en ce que** les pièces ( 5, 34, 35, 38, 39 ) de connexion alignées sont vissées directement les unes aux autres.
